# EUROPÄISCHE PATENTSCHRIFT

(11) **EP 2 960 221 B1**
(45) Veröffentlichungstag und Bekanntmachung des Hinweises auf die Patenterteilung: **21.09.2016**
(21) Anmeldenummer: 14174575.2
(22) Anmeldetag: 26.06.2014
(51) Int. Cl.: C04B 35/043, C04B 35/101

(54) **Feuerfestes keramisches Erzeugnis**
Refractory ceramic product
Produit réfractaire céramique

(43) Veröffentlichungstag der Anmeldung: 30.12.2015
(73) Patentinhaber: Refractory Intellectual Property GmbH & Co. KG, 1100 Wien (AT)
(72) Erfinder: Nilica, Roland, 8715 Feistritz (AT); Platzer, Alexander, 8700 Leoben (AT); Piribauer, Christoph, 8700 Leoben (AT)
(74) Vertreter: Berkenbrink, Kai-Oliver

(56) Entgegenhaltungen:
- EP-A1- 0 261 068
- WO-A1-94/21407
- JP-A- H03 205 355
- JP-A- H07 267 719
- JP-A- H09 263 446
- JP-A- 2007 055 848
- JP-B2- 3 217 864
- US-A- 5 573 987
- US-A- 5 580 643
- US-A- 5 854 157
- I. B. KRYNETSKII, ET AL: 'Size effect of the thermal expansion of nanostructural copper oxide' PHYSICS OF THE SOLID STATE. Bd. 50, Nr. 4, 01 April 2008, US, Seiten 756 - 758, XP055238732 DOI: 10.1134/S1063783408040264 ISSN: 1063-7834

## Beschreibung

Die Erfindung betrifft ein feuerfestes keramisches Erzeugnis.

Der Begriff "feuerfestes keramisches Erzeugnis" im Sinne der Erfindung bezeichnet insbesondere keramische Erzeugnisse mit einer Einsatztemperatur von über 600° C und bevorzugt feuerfeste Werkstoffe gemäß DIN 51060, also Werkstoffe mit einem Kegelfallpunkt > SK 17. Die Ermittlung des Kegelfallpunktes kann insbesondere gemäß DIN EN 993-12 erfolgen.

Feuerfeste keramische Erzeugnisse sowie keramische Erzeugnisse werden im Stand der Technik umfangreich offenbart. Beispielsweise offenbart JP H09 263446 A ein feuerfestes Erzeugnis, das dadurch erhalten wird, dass ZrO₂ Partikel aus Al₂O₃, auf deren Oberfläche ZnAl₂O₄ erzeugt ist, hinzugegeben werden und die Mischung anschließend geformt und gesintert wird. In JP H03 205355 A wird ein feuerfestes Erzeugnis auf Basis Al₂O₃, MgO und Kohlenstoff beschrieben, wobei die Matrix des Erzeugnisses Körner aus MgO umfasst, die eine Beschichtung aus Al₂O₃ aufweisen. US 5,573,987 A offenbart eine feuerfeste keramische Masse, die zwei unterschiedliche Sorten Körner aus MgO umfasst, wobei eine dieser Sorte Körner eine Beschichtung in Form von Magnesia-Spinell aufweisen kann. In US 5,854,157 A wird ein keramischer Kompositwerkstoff beschrieben, bei dem ein mit MgO, MgAl₂O₄ oder ZrO₂ beschichtetes Perowskit-Oxid zusammen mit Al₂O₃ versintert wird. In EP 0 261 068 und US 5,580,643 A werden keramische Verbundwerkstoffe offenbart, bei denen in einer Matrix aus Al₂O₃ oxidische oder nicht oxidische Komponenten, die verschiedene Beschichtungen aufweisen können, eingelagert sind.

Wie die meisten keramischen Erzeugnisse, zeichnen sich auch feuerfeste keramische Erzeugnisse regelmäßig durch eine hohe Sprödigkeit aus. Bei einer mechanischen Beanspruchung des Erzeugnisses, insbesondere soweit auch Zugkräfte auf das Erzeugnis wirken, können Risse im Erzeugnis entstehen, die schließlich zu einem Bruch des Erzeugnisses führen können.

Durch eine Verringerung der Sprödigkeit des feuerfesten keramischen Erzeugnisses kann dessen Bruchzähigkeit und damit seine Fähigkeit, einer spröden Zerstörung zu widerstehen, erhöht werden.

Zur Verringerung der Sprödigkeit eines feuerfesten keramischen Erzeugnisses ist es bekannt, sogenannte Elastifizierer oder Flexibilisierer in das Erzeugnis einzubinden, durch die die Sprödigkeit des Erzeugnisses verringert und seine Bruchzähigkeit erhöht wird. Elastifizierer sind in der Regel körnige, feuerfeste mineralische Rohstoffe, die beispielsweise auf feuerfesten Grundstoffen wie Magnesia (MgO), Tonerde (Al₂O₃), Magnesia-Spinell (MgO·Al₂O₃) oder Forsterit (2 MgO·SiO₄) basieren. Die Wirkungsweise dieser Elastifizierer beruht darauf, dass diese einen anderen Wärmeausdehnungskoeffizienten als die Hauptkomponente des keramischen Erzeugnisses aufweisen, so dass es beim keramischen Brand des Erzeugnisses und seiner anschließenden Abkühlung zu Spannungen zwischen dem Elastifizierer und der Hauptkomponente kommt. Hierdurch bilden sich Mikrorisse im keramischen Erzeugnis. Im Fall eines mechanischen Angriffs auf das Erzeugnis kompensieren diese Mikrorisse einen Teil der Bruchenergie, wodurch die Gefahr eines Sprödigkeitsbruches des Erzeugnisses verringert werden kann.

Grundsätzlich hat sich der Einsatz solcher Elastifizierer in feuerfesten keramischen Erzeugnissen bewährt, um deren Sprödigkeit zu verringern. Allerdings können in einigen Fällen gewünschte Werkstoffkombinationen von keramischer Hauptkomponente und Flexibilisierer nicht realisiert werden, beispielsweise weil es beim keramischen Brand eines solchen Erzeugnisses zu ungewünschten Reaktionen zwischen Hauptkomponente und Elastifizierer kommt, die einer Verwendung des Elastifizierers entgegenstehen. So ist beispielsweise die Verwendung von Tonerde (Al₂O₃) als Flexibilisierer in einem feuerfesten keramischen Erzeugnis auf Basis Magnesia (MgO) wünschenswert, da Tonerde aufgrund seines im Vergleich zu Magnesia unterschiedlichen Wärmeausdehnungskoeffizienten grundsätzlich als Elastifizierer für feuerfeste keramische Erzeugnisse auf Basis Magnesia geeignet wäre. Allerdings kann es beim Brand eines keramischen Erzeugnisses auf Basis Magnesia mit einem Flexibilisierer in Form von Tonerde zur Bildung von Magnesia-Spinell (MgO·Al₂O₃) aus den Komponenten Magnesia und Tonerde kommen. Magnesia-Spinell weist gegenüber Tonerde jedoch eine geringere Dichte auf, so dass die Bildung von Magnesia-Spinell mit einer Volumenvergrößerung einhergeht. Dadurch können sich mechanische Spannungen im keramischen Erzeugnis aufbauen, die zu einer Beschädigung oder auch zu einem Bruch des Erzeugnisses führen können.

Der Erfindung liegt die Aufgabe zugrunde, ein feuerfestes keramisches Erzeugnis zur Verfügung zu stellen, dessen Bruchzähigkeit durch einen Elastifizierer erhöht ist, wobei das Spektrum der für das Erzeugnis verwendbaren Elastifizierer gegenüber dem Stand der Technik erweitert ist.

Zur Lösung dieser Aufgabe wird erfindungsgemäß ein feuerfestes keramisches Erzeugnis gemäß Anspruch 1 zur Verfügung gestellt.

Das erfindungsgemäße feuerfeste keramische Erzeugnis geht zunächst von den aus dem Stand der Technik bekannten Erzeugnissen aus, die zur Erhöhung ihrer Bruchzähigkeit einen Elastifizierer aufweisen. Insoweit weist das Gefüge des erfindungsgemäßen feuerfesten keramischen Erzeugnisses zunächst einen ersten Stoff auf, der die wenigstens eine Hauptkomponente des keramischen Erzeugnisses bilden kann, bevorzugt den größten Massenanteil des Erzeugnisses bildet und dem Erzeugnis seine wesentlichen Eigenschaften verleiht. Dieser wenigstens eine erste Stoff beziehungsweise diese wenigstens eine erste Hauptkomponente bildet in dem Erzeugnis eine Matrix, in die Körner aus wenigstens einem zweiten Stoff eingelagert sind. Dieser zweite Stoff bildet einen Elastifizierer für das Erzeugnis, indem der zweite Stoff einen anderen Wärmeausdehnungskoeffizienten aufweist als der wenigstens eine erste Stoff und bei dem keramischen Brand des Erzeugnisses dadurch, wie aus dem Stand der Technik bekannt, Mikrorisse in dem erfindungsgemäßen feuerfesten keramischen Erzeugnis erzeugt.

Eine wesentliche Neuerung des erfindungsgemäßen feuerfesten keramischen Erzeugnisses gegenüber solchen Erzeugnissen mit einem Elastifizierer nach dem Stand der Technik besteht nunmehr darin, dass die aus dem zweiten Stoff gebildeten Körner, also der Elastifizierer, auf ihrer Oberfläche eine Beschichtung aus wenigstens einem solchen Stoff aufweisen, der bei der Anwendung des Erzeugnisses stabil ist. Diese Beschichtung, die hierin als dritter Stoff bezeichnet wird, dient aufgrund ihrer Stabilität bei der Anwendung des Erzeugnisses damit als Diffusionsbarriere zwischen dem ersten und dem zweiten Stoff beziehungsweise zwischen der Hauptkomponente und dem Elastifizierer, so dass diese bei einer Temperaturbeanspruchung des Erzeugnisses eine Reaktion zwischen dem ersten und zweiten Stoff verhindert oder zumindest weitgehend unterdrückt.

Diese, durch den dritten Stoff gebildete Diffusionsbarriere zwischen erstem und zweitem Stoff ermöglicht es, dass das Spektrum der für das Erzeugnis verwendbaren Elastifizierer gegenüber dem Stand der Technik größer ist, da für den Elastifizierer, also den zweiten Stoff im Sinne der Erfindung, auch solche Stoffe verwendbar sind, die bei der Anwendung des Erzeugnisses eine unerwünschte Reaktion mit der Hauptkomponente eingehen würden, soweit der Elastifizierer die erfindungsgemäße Beschichtung nicht aufweisen würde.

Das erfindungsgemäße Erzeugnis kann einen oder mehrere erste Stoffe, also eine oder mehrere Hauptkomponenten aufweisen. Ebenso kann das erfindungsgemäße Erzeugnis einen oder mehrere zweite Stoffe, also einen oder mehrere Elastifizierer aufweisen. Ferner kann das erfindungsgemäße Erzeugnis einen oder mehrere dritte Stoffe, also Diffusionsbarrieren auf der Oberfläche des Elastifizierers aufweisen. Soweit der wenigstens eine erste, zweite und dritte Stoff hierin aus sprachlichen Gründen nur im Singular mit erster, zweiter oder dritter Stoff bezeichnet wird, gelten die entsprechenden Ausführungen in gleicher Weise, soweit mehrere erste, zweite oder dritte Stoffe im Erzeugnis vorliegen.

Die nachfolgenden Angaben in Masse-% beziehen sich, soweit im Einzelfall nicht anders angegeben, auf den Massenanteil der jeweiligen Komponente, bezogen auf die Gesamtmasse des erfindungsgemäßen Erzeugnisses.

Bei dem erfindungsgemäßen Erzeugnis kann es sich grundsätzlich um eine beliebige Art von feuerfestem Erzeugnis handeln, beispielsweise um ein geformtes feuerfestes Erzeugnis (also einen feuerfesten Stein), ein ungeformtes feuerfestes Erzeugnis (beispielsweise eine Masse) oder ein Funktionalprodukt. Bevorzugt handelt es sich bei dem erfindungsgemäßen Erzeugnis um ein geformtes feuerfestes Erzeugnis.

Ferner handelt es sich bei dem erfindungsgemäßen Erzeugnis bevorzugt um ein gesintertes Erzeugnis, also ein feuerfestes Erzeugnis mit einer keramischen Bindung.

Der erste Stoff kann in Form von Körnern im Erzeugnis vorliegen. Dabei können die Körner des ersten Stoffes in Form miteinander versinterter Körner vorliegen, so dass die aus dem ersten Stoff gebildete Matrix des Gefüges des erfindungsgemäßen Erzeugnisses eine Matrix aus miteinander versinterten Körnern aus dem ersten Stoff bildet.

Die Körner aus dem ersten Stoff können eine durchgehende Matrix über das gesamte Volumen des Erzeugnisses bilden.

Der zweite Stoff liegt in Form von Körnern im Gefüge des erfindungsgemäßen Erzeugnisses vor, wobei diese Körner in die aus dem ersten Stoff gebildete Matrix eingelagert sind. Dabei können die Körner aus dem zweiten Stoff als isolierte Inseln aus einzelnen oder miteinander versinterten Körnern in die aus dem ersten Stoff gebildete Matrix eingelagert sein. Diese isolierten Inseln aus einzelnen oder miteinander versinterten Körnern aus dem zweiten Stoff können zumindest teilweise über die aus dem dritten Stoff gebildete Beschichtung mit der Matrix versintert sein.

Die Körner aus dem zweiten Stoff weisen auf ihrer Oberfläche zumindest abschnittsweise, bevorzugt vollständig eine Beschichtung aus wenigstens einem dritten Stoff auf. Besonders bevorzugt weisen die Körner aus dem zweiten Stoff durchschnittlich auf wenigstens 80 % ihrer Oberfläche, besonders bevorzugt durchschnittlich auf wenigstens 85, 90 oder auch 95 % ihrer Oberfläche eine Beschichtung aus dem wenigstens einen dritten Stoff auf. Hierdurch ist sichergestellt, dass der dritte Stoff weitgehend als Diffusionsbarriere zwischen dem ersten und zweiten Stoff wirkt, so dass der erste und zweite Stoff bei der Anwendung des Erzeugnisses weitgehend nicht miteinander reagieren und damit keine ungewünschten Reaktionsprodukte im Erzeugnis erzeugen.

Unter "Anwendung" des Erzeugnisses ist erfindungsgemäß der beabsichtigte Einsatzzweck des Erzeugnisses mit den dabei herrschenden Bedingungen gemeint, also den Bedingungen, denen das Erzeugnis bei dem beabsichtigten Einsatz unterworfen ist, insbesondere auch der dabei herrschenden Temperatur und Atmosphäre. Da feuerfeste keramische Erzeugnisse regelmäßig für Anwendungen bei hohen Temperaturen, insbesondere im Temperaturbereich von etwa 600 bis etwa 2.000° C unterworfen sind, ist der dritte Stoff beispielsweise auch dann stabil, soweit das Erzeugnis einer Temperatur von beispielsweise über 600° C, 800° C, 1.000° C, 1.200° C, 1.300° C, 1.400° C oder über 1.500° C unterworfen ist.

Dass der dritte Stoff bei der Anwendung des Erzeugnisses, insbesondere also beispielsweise soweit das Erzeugnis den vorstehenden Temperaturen unterworfen wird, "stabil" ist, bringt erfindungsgemäß zum Ausdruck, dass der dritte Stoff bei der Anwendung des Erzeugnisses eine Diffusionsbarriere für den ersten und zweiten Stoff darstellt. Der dritte Stoff liegt bei der Anwendung des Erzeugnisses mithin derart vor, dass er eine Reaktion des ersten Stoffes mit dem zweiten Stoff vollständig unterdrückt oder weitgehend verhindert, so dass es bei der Anwendung des Erzeugnisses zu keiner oder keiner wesentlichen unerwünschten Reaktion zwischen dem ersten und zweiten Stoff kommt.

Ferner ist der dritte Stoff derart ausgebildet, dass er sich bei der Anwendung des Erzeugnisses nicht zersetzt und keine Schmelze bildet. Insofern kann erfindungsgemäß insbesondere vorgesehen sein, dass der invariante Punkt in den Stoffsystemen aus dem ersten und dritten Stoff sowie aus dem zweiten und dritten Stoff jeweils oberhalb der Anwendungstemperatur des Erzeugnisses liegt.

Der erste, zweite und dritte Stoff stellen die Phasen, also die Mineralphasen dar, die das Gefüge des Erzeugnisses bilden.

Der erste Stoff liegt auf Basis von MgO vor.

Indem ein Stoff "auf Basis" eines hierin genannten Oxides oder einer Verbindung vorliegt, ist erfindungsgemäß zum Ausdruck gebracht, dass der Stoff überwiegend aus dem betreffenden Oxid oder der Verbindung gebildet ist, beispielsweise in einem Anteil von wenigsten 80, 85 oder 90 Masse-%, bezogen auf den jeweiligen Stoff. Die verbleibenden Massenanteile des Stoffes können von Komponenten gebildet sein, die beispielsweise als Verunreinigungen oder Nebenbestandteile über die Rohstoffe, aus denen die jeweiligen Stoffe hergestellt wurden, in das Erzeugnis eingebracht wurden. MgO kann beispielsweise auf Basis der Rohstoffe Sintermagnesia oder Schmelzmagnesia in das Erzeugnis eingetragen worden sein, so dass neben MgO noch die typischen Verunreinigungen beziehungsweise Nebenbestandteile vorliegen können, die in Sinter- oder Schmelzmagnesia neben MgO vorhanden sind. Beispielsweise können dies insbesondere Fe₂O₃, CaO, SiO₂ und Al₂O₃ sein.

Der zweite Stoff liegt auf Basis von Al₂O₃ vor.

Bevorzugt unterscheiden sich der erste und zweite Stoff hinsichtlich ihrer Zusammensetzung, insbesondere ihrer chemischen Zusammensetzung, sowie hinsichtlich ihrer physikalischen Eigenschaften voneinander.

Als besonders vorteilhaft hat sich erfindungsgemäß eine Beschichtung aus einem dritten Stoff auf Basis von Gahnit erwiesen.

Gahnit (Zinkspinell; ZnO·Al₂O₃; ZnAl₂O₄) bildet auf Körnern auf Basis Al₂O₃, die in eine Matrix auf Basis einer Hauptkomponente in Form von MgO eingebettet sind, eine Beschichtung aus, die bei der Anwendung eines entsprechenden Erzeugnisses stabil ist und damit als Diffusionsbarriere zwischen MgO und Al₂O₃ wirkt. Hierdurch kann das MgO bei der Anwendung des Erzeugnisses nicht mit dem Al₂O₃ des Flexibilisierers zu Magnesia-Spinell reagieren. Die Körner auf Basis Al₂O₃ bleiben damit stabil in der Matrix auf Basis MgO, so dass die Körner auf Basis Al₂O₃ aufgrund ihres in Bezug auf MgO unterschiedlichen Wärmeausdehnungskoeffizienten ihre Wirkung als Elastifizierer voll entfalten können und die Bildung von unerwünschten Mineralphasenreaktionen zwischen MgO und Al₂O₃ unterdrückt wird. Ferner liegen die invarianten Punkte in den betreffenden Mehrstoffsystemen so hoch, dass sie in der Regel oberhalb der bei der Anwendung des Erzeugnisses herrschenden Temperaturen liegen, so dass eine Beschichtung, in Form von Gahnit, bei der Anwendung des Erzeugnisses keine Schmelzphase ausbildet.

Der wenigstens eine erste Stoff bildet typischerweise die Hauptkomponente des erfindungsgemäßen Erzeugnisses und kann insoweit beispielsweise in einem Anteil von wenigstens 60 Masse-% vorliegen, also beispielsweise auch in einem Anteil von wenigstens 65, 70, 72, 74, 75, 76, 77, 78, 79, 80, 81, 82, 83 oder 84 Masse-%. Beispielsweise kann ferner vorgesehen sein, dass der wenigstens eine erste Stoff in einem Anteil von höchstens 97 Masse-% im Versatz vorliegt, also beispielsweise auch in einem Anteil von höchstens 96, 95, 94, 93, 92, 91, 90, 89 oder 88 Masse-%.

Der wenigstens eine zweite Stoff stellt den Elastifizierer des erfindungsgemäßen Erzeugnisses dar und kann insoweit beispielsweise in Anteilen vorliegen, in denen entsprechende Elastifizierer typischerweise in feuerfesten keramischen Erzeugnissen vorliegen. Beispielsweise kann der wenigstens eine zweite Stoff in einem Anteil von wenigstens 1, 2, 3, 4, 5, 6, 7, 8. 9 oder 10 Masse-% im Versatz vorliegen. Beispielsweise kann der wenigstens eine zweite Stoff ferner in einem Anteil von höchstens 30, 25, 24, 22, 20, 19, 18, 17, 16, 15, 14, 13, 12 oder 11 Masse-% im Versatz vorliegen.

Der Massenanteil des wenigstens einen dritten Stoffes im Erzeugnis kann typischerweise vom Massenanteil des wenigstens einen zweiten Stoffes im erfindungsgemäßen Erzeugnis abhängen. Da der wenigstens eine dritte Stoff als Beschichtung auf den Körnern auf dem wenigstens einen zweiten Stoff vorliegt, ist der Massenanteil des wenigstens einen dritten Stoffes umso höher, umso höher der Massenanteil des wenigstens einen zweiten Stoffes im Erzeugnis ist. Beispielsweise kann der Massenanteil des wenigstens eines dritten Stoffes im Bereich von 8 bis 75 Masse-% in Bezug auf den Massenanteil des wenigstens einen zweiten Stoffes im Erzeugnis liegen, also beispielsweise auch bei wenigstens 12, 16, 20 und beispielsweise auch bei höchstens 50, 35 oder 30 Masse-% in Bezug auf den Massenanteil des wenigstens einen zweiten Stoffes im Erzeugnis. Beispielsweise kann der Anteil des wenigstens einen dritten Stoffes im Erzeugnis bei wenigstens 0,4 Masse-% liegen, also beispielsweise auch bei wenigstens 0,6 Masse-%, 0,8 Masse-%, 1,0 Masse-%, 1,2 Masse-%, 1,4 Masse-%, 1,6 Masse-%, 1,8 Masse-%, 2,2 Masse-%, 2,4 Masse-%, 2,5 Masse-%, 2,6 Masse-% oder 2,7 Masse-%. Ferner kann der Anteil des wenigstens einen dritten Stoffes im Erzeugnis beispielsweise bei höchstens 20 Masse-% liegen, also beispielsweise auch bei höchstens 15 Masse-%, 12 Masse-%, 10 Masse-%, 9 Masse-%, 8 Masse-%, 7 Masse-%, 6 Masse-%, 5 Masse-%, 4,5 Masse-%, 4 Masse-%, 3,5 Masse-%, 3,3 Masse-%, 3,2 Masse-%, 3,1 Masse-%, 3,0 Masse-% oder 2,9 Masse-%.

Der wenigstens eine erste, zweite und dritte Stoff liegen auf Basis der vorbezeichneten Oxide im Erzeugnis vor. Ferner können der wenigstens eine erste, zweite und dritte Stoff in Form der in der nachfolgenden Tabelle 1 angegebenen Stoffe vorliegen. Dabei ist in Tabelle 1 mit dem Erzeugnis Nr. 1 ein Erzeugnis mit dem in den nachfolgenden Spalten angegebenen ersten, zweiten und dritten Stoff mit dem jeweiligen Schmelzpunkt sowie den invarianten Punkten der jeweiligen Stoffsysteme angegeben:

**Tabelle 1**

| Erzeugnis | Erster Stoff (Schmelztemperatur in °C) | Invarianter Punkt zwischen erstem und drittem Stoff | Dritter Stoff (Schmelztemperatur in °C) | Invarianter Punkt zwischen zweitem und drittem Stoff | Zweiter Stoff (Schmelztemperatur in °C) |
|---|---|---|---|---|---|
| 1 | MgO (2.820°C) | ca. 1.800°C | ZnAl₂O₄ (1.950°C) | ca. 1.720°C | Al₂O₃ (2.053°C) |

Um als Elastifizierer für die aus dem wenigstens einen ersten Stoff gebildete Matrix des erfindungsgemäßen Erzeugnisses dienen zu können, weist der wenigstens eine zweite Stoff einen anderen Wärmeausdehnungskoeffizienten als der wenigstens eine erste Stoff auf. Erfindungsgemäß kann insbesondere vorgesehen sein, dass der Wärmeausdehnungskoeffizient des zweiten Stoffes wenigstens 10 % größer oder kleiner als der Wärmeausdehnungskoeffizient des ersten Stoffes ist, bezogen auf den Wärmeausdehnungskoeffizienten des ersten Stoffes. Demnach kann der Wärmeausdehnungskoeffizient des zweiten Stoffes beispielsweise auch wenigstens 15, 20, 25, 30, 35, 40, 45 oder 50 % größer oder kleiner als der Wärmeausdehnungskoeffizient des ersten Stoffes sein. Bevorzugt ist der Wärmeausdehnungskoeffizient des zweiten Stoffes im vorgenannten Umfang kleiner als der Wärmeausdehnungskoeffizient des ersten Stoffes.

Der Wärmeausdehnungskoeffizient ist hierin definiert als Längenausdehnungskoeffizient α des jeweiligen Stoffes, also als die Proportionalitätskonstante zwischen der Temperaturänderung und der damit einhergehenden relativen Längenänderung.

Der Wärmeausdehnungskoeffizient α in [10⁻⁶ K] des zweiten Stoffes kann wenigstens beispielsweise 1, 2, 3, 4 oder 5 [10⁻⁶ K] größer oder kleiner, insbesondere kleiner, als der Wärmeausdehnungskoeffizient des ersten Stoffes sein.

Soweit das Erzeugnis mehrere erste und/oder zweite Stoffe aufweist, gelten die vorgemachten Ausführungen hinsichtlich des unterschiedlichen Wärmeausdehnungskoeffizienten zwischen den ersten und zweiten Stoffe für wenigstens eine der Kombinationen aus erstem und zweitem Stoff, bevorzugt jedoch für alle Kombinationen aus ersten und zweiten Stoffen.

Bevorzugt ist vorgesehen, dass die Korngröße der Körner des zweiten Stoffes im Mittelkornbereich vorliegt, bezogen auf die Korngröße der Körner des ersten Stoffes. Beispielsweise kann vorgesehen sein, dass die Korngrößer der Körner des zweiten Stoffes zwischen der Korngröße der kleinsten Körner und der größten Körner des ersten Stoffes liegt. Beispielsweise können wenigstens 10 oder 20 Masse-% der Körner des ersten Stoffes (bezogen auf die Gesamtmasse des ersten Stoffes) eine kleinere Korngröße aufweisen als wenigstens 95 Masse-% der Körner des zweiten Stoffes (bezogen auf die Gesamtmasse des zweiten Stoffes). Beispielsweise können ferner wenigstens 10 oder 20 Masse-% der Körner des ersten Stoffes (bezogen auf die Gesamtmasse des ersten Stoffes) eine Korngröße aufweisen, die größer ist als 95 Masse-% der Körner des zweiten Stoffes (bezogen auf die Gesamtmasse des zweiten Stoffes).

Die absolute Korngröße der Körner des ersten und zweiten Stoffes ist grundsätzlich beliebig und kann gemäß den aus dem Stand der Technik bekannten Korngrößen für Körner, die eine Matrix aus einer Hauptkomponente mit darin eingebetteten Körner eines Elastifizierers bilden, gewählt werden. Beispielsweise kann vorgesehen sein, dass die Körner des ersten Stoffes zu 100 Masse-% oder auch zu wenigstens 90 Masse-% (bezogen auf die Gesamtmasse des ersten Stoffes) eine Korngröße im Bereich von > 0-10 mm oder im Bereich von > 0-9 mm, > 0-8 mm, > 0-7 mm, > 0-6 mm oder > 0-5 mm aufweisen.

Hinsichtlich der Körner des zweiten Stoffes kann vorgesehen sein, dass diese beispielsweise vollständig oder zu wenigstens 90 Masse-% (bezogen auf die Masse des zweiten Stoffes) eine Korngröße im Bereich von 0,5-7 mm, also beispielsweise auch im Bereich von 0,5-6 mm, 0,5-5 mm, 0,5-4 mm, 0,5-3 mm, 1-7 mm, 1-6 mm, 1-5 mm, 1-4 mm oder 1-3 mm aufweisen.

Erfindungsgemäß hat sich herausgestellt, dass es für die Wirksamkeit des zweiten Stoffes als Elastifizierer vorteilhaft ist, wenn die Beschichtung des dritten Stoffes auf den Körnern aus dem zweiten Stoff in einer möglichst geringen Dicke vorliegt. Gleichzeitig sollte die Beschichtung des dritten Stoffes auf dem zweiten Stoff jedoch in einer solchen Dicke vorliegen, dass eine Reaktion zwischen dem ersten und zweiten Stoff vollständig oder weitgehend unterdrückt werden kann. Insoweit hat es sich als vorteilhaft herausgestellt, wenn die Dicke der Beschichtung des dritten Stoffes auf dem zweiten Stoff durchschnittlich höchstens 20 % des mittleren Durchmessers der Körner des zweiten Stoffes (einschließlich der Beschichtung) beträgt und beispielsweise auch höchstens durchschnittlich 15, 10 oder 5 % des mittleren Durchmessers der Körner des zweiten Stoffes. Ferner kann die Dicke der Beschichtung des dritten Stoffes auf dem zweiten Stoff durchschnittlich wenigstens 1, 2 oder 3 % des mittleren Durchmessers der Körner des zweiten Stoffes (einschließlich der Beschichtung) betragen.

Der mittlere Korndurchmesser der Körner des zweiten Stoffes kann beispielsweise bestimmt sein gemäß DIN EN 933-1:2012.

Beispielsweise kann die Dicke der Beschichtung des dritten Stoffes auf den Körnern auf dem zweiten Stoff durchschnittlich wenigstens 5 µm betragen, also beispielsweise durchschnittlich auch wenigstens 10, 15, 20, 25, 30, 35, 40, 45, 50, 55, 60, 65, 70, 75, 80, 85, 90, 95 oder 100 µm. Ferner kann die Dicke der Beschichtung des dritten Stoffes auf den Körnern auf dem zweiten Stoff durchschnittlich höchstens 1000 µm betragen, also beispielsweise durchschnittlich auch höchstens 900, 800, 700, 600, 500, 400 oder 300 µm.

Zur Herstellung des erfindungsgemäßen Erzeugnisses kann im Wesentlichen auf die aus dem Stand der Technik bekannten Technologien zur Herstellung eines feuerfesten keramischen Erzeugnisses aus einer, eine Matrix ausbildenden Hauptkomponente mit einem darin eingelagerten Elastifizierer zurückgegriffen werden. Der Unterschied zu diesen aus dem Stand der Technik bekannten Technologien zur Herstellung eines feuerfesten keramischen Erzeugnisses und der Technologie, die zur Herstellung eines erfindungsgemäßen Erzeugnisses anzuwenden ist, kann darin bestehen, dass bei der Technologie zur Herstellung eines erfindungsgemäßen Erzeugnisses auf den Körnern des Elastifizierers, also des zweiten Stoffes, eine Beschichtung in Form des wenigstens einen dritten Stoffes im Sinne der Erfindung auszubilden ist.

Gemäß dem Stand der Technik kann zur Herstellung eines erfindungsgemäßen Erzeugnisses zunächst ein Versatz zur Verfügung gestellt werden, der Körner aus dem wenigstens einen ersten Stoff sowie Körner aus dem wenigstens einem zweiten Stoff umfasst. Die Körner aus dem zweiten Stoff können eine Beschichtung aufweisen, die bereits den wenigstens einen dritten Stoff darstellt oder aus der sich bei dem keramischen Brand des Versatzes zu einem erfindungsgemäßen keramischen Erzeugnis der dritte Stoff bildet.

Der Versatz kann, wie aus dem Stand der Technik bekannt, einen Grünbinder aufweisen, um einem aus dem Versatz geformten, ungebrannten Körper, einem sogenannten Grünkörper, eine Grünstandfestigkeit zu verleihen. Der Grünkörper kann, gegebenenfalls nach einer vorhergehenden Trocknung, einem keramischen Brand unterworfen werden, so dass sich durch den keramischen Brand und nach anschließender Kühlung ein feuerfestes keramisches Erzeugnis ausbildet. Der Brand erfolgt insbesondere bei solchen Temperaturen, dass die Körner des Versatzes miteinander versintern und hierdurch einen gesinterten, feuerfesten keramischen Körper bilden.

Soweit die Körner aus dem zweiten Stoff bereits im Versatz in einer solchen Form vorliegen, dass sie eine Beschichtung aufweisen, die bereits den dritten Stoff darstellt, können diese Körner beispielsweise in einem gesonderten Verfahrensschritt hergestellt werden. Hierzu können die Körner aus dem zweiten Stoff beispielsweise mit einer Beschichtung versehen werden, auf der sich bei einem Brand eine Beschichtung in Form des dritten Stoffes ausbildet. Hierzu können die entsprechend beschichteten Körner beispielsweise einem Brand unterworfen werden, so dass sich auf die Körner aus dem zweiten Stoff die Beschichtung aus dem dritten Stoff ausbildet. Die entsprechend mit dem dritten Stoff beschichteten Körner aus dem zweiten Stoff können anschließend in den zur Herstellung des erfindungsgemäßen Erzeugnisses vorgesehenen Versatz eingegeben werden.

Alternativ kann beispielsweise vorgesehen sein, dass die Körner aus dem zweiten Stoff mit einer Beschichtung versehen werden, aus der sich die Beschichtung aus dem dritten Stoff ausbildet, wobei die entsprechend beschichteten Körner jedoch nicht gebrannt werden, bevor sie in den Versatz zur Herstellung des erfindungsgemäßen Erzeugnisses eingegeben werden. Die Beschichtung in Form des dritten Stoffes auf den Körnern aus dem zweiten Stoff bildet sich in diesem Fall erst bei dem keramischen Brand des erfindungsgemäßen Erzeugnisses aus.

Die vorbeschriebene Technologie kann beispielsweise angewandt werden zur Beschichtung von Körnern aus einem zweiten Stoff auf Basis von Al₂O₃ mit einem dritten Stoff in Form von Gahnit. Die entsprechend beschichteten Körner können als Elastifizierer für eine Hauptkomponente in Form von Körnern auf Basis MgO verwendet werden.

Alternativ können die Körner aus dem zweiten Stoff mit einer Beschichtung versehen werden, aus der sich als Reaktionsprodukt aus der Beschichtung und den Körnern aus dem zweiten Stoff während eines Brandes die Beschichtung in Form des dritten Stoffes ausbildet. Beispielsweise können Körner aus einem zweiten Stoff auf Basis von Al₂O₃ mit Zinkoxid (ZnO) beschichtet werden, so dass sich bei einem Brand der entsprechend beschichteten Körner auf deren Oberfläche eine Beschichtung in Form eines dritten Stoffes in Form von Gahnit ausbildet. Der Brand der Körner kann erfolgen, bevor die beschichteten Körner einem Versatz zur Herstellung eines erfindungsgemäßen Erzeugnisses beigegeben werden. Die Beschichtung in Form eines dritten Stoffes in Form von Gahnit kann sich jedoch beispielsweise auch ausbilden, indem die mit Zinkoxid beschichteten Körner auf Basis Al₂O₃ ungebrannt im Versatz vorliegen und sich die Schicht aus Gahnit erst beim Brand des Versatzes ausbildet. Neben mit Zinkoxid beschichteten Körnern auf Basis Al₂O₃ weist der Versatz Körner auf Basis MgO als Hauptkomponente beziehungsweise ersten Stoff auf.

Alternativ kann beispielsweise vorgesehen sein, dass die Körner aus dem zweiten Stoff eine Beschichtung aufweisen, die während des keramischen Brandes des Erzeugnisses mit dem ersten Stoff ein Reaktionsprodukt ausbildet, das den dritten Stoff bildet.

Zum Aufbringen der Beschichtung auf die Körner aus dem zweiten Stoff kann der Fachmann auf die hierzu aus dem Stand der Technik bekannten Verfahren zurückgreifen, beispielsweise ein Aufbringen über die Gasphase (beispielsweise CVD oder PVD), ein Aufsprühen, ein Aufgranulieren oder ein Aufbringen über eine Lösung (beispielsweise über ein Sol-Gel-Verfahren).

Die Brenntemperaturen für den keramischen Brand des erfindungsgemäßen Erzeugnisses können gemäß den aus dem Stand der Technik bekannten Temperaturen zum Sintern eines keramischen Körpers gewählt werden. Die entsprechenden Temperaturen sind dem Fachmann bekannt. Beispielsweise können die Brenntemperaturen im Bereich von 1.300 bis 1.500° C liegen.

Ein Ausführungsbeispiel der Erfindung wird nachstehend näher erläutert.

Zur Herstellung des erfindungsgemäßen Erzeugnisses wird zunächst zur Verfügung gestellt ein Versatz mit Körnern aus Sintermagnesia (mit einem Anteil an MgO > 90 Masse-%, bezogen auf die Gesamtmasse der Körner aus Sintermagnesia) als Hauptkomponente mit einem Anteil von 87 Masse-%, bezogen auf die Gesamtmasse des Versatzes. Die Körner aus Sintermagnesia liegen in einer Korngröße im Bereich von > 0-10 mm vor.

Neben Körnern aus Sintermagnesia liegen im Versatz Körner aus Sinterkorund (mit einem Anteil an Al₂O₃ > 90 Masse-%, bezogen auf die Gesamtmasse der Körner aus Sinterkorund) vor, die mit Zinkoxid (ZnO) beschichtet sind. Die entsprechend beschichteten Körner liegen in einem Massenanteil von 13 Masse-% vor, bezogen auf die Gesamtmasse des Versatzes. Bei den beschichteten Körnern beträgt der Massenanteil der Beschichtung aus Zinkoxid 3 Masse-%, bezogen auf die Gesamtmasse des Versatzes. Die beschichteten Körner weisen eine Korngröße im Bereich von 1-3 mm auf. Die Körner aus Sinterkorund bilden im Erzeugnis die Körner aus dem zweiten Stoff, während sich aus der Beschichtung auf den Körnern aus Sinterkorund während des keramischen Brandes des Erzeugnisses eine Beschichtung in Form des dritten Stoffes ausbildet.

Dem Versatz wird ein Grünbinder zugegeben, der Versatz anschließend gemischt und schließlich zu Grünkörpern gepresst. Die Grünkörper werden anschließend getrocknet und schließlich für etwa fünf Stunden einem keramischen Brand ausgesetzt, wobei ein Teil der Grünkörper bei einer Temperatur von etwa 1.400 °C und ein anderer Teil einer Temperatur von etwa 1.500 °C ausgesetzt wird. Nach dem Brand erhält man erfindungsgemäße Erzeugnisse.

Während des keramischen Brandes bilden die Körner aus Sintermagnesia eine Matrix aus gesinterten Körnern auf Basis MgO aus. Die Körner aus Sinterkorund bilden den zweiten Stoff in Form von Körnern auf Basis Al₂O₃. Ferner reagiert die Beschichtung aus Zinkoxid mit dem Al₂O₃ der Körner aus Sinterkorund und bildet hierdurch auf diesen Körnern eine Beschichtung in Form von Gahnit aus. Diese Beschichtung in Form von Gahnit stellt eine Beschichtung in Form des dritten Stoffes dar. Diese Beschichtung in Form von Gahnit verhindert, dass das MgO der Körner des ersten Stoffes mit dem Al₂O₃ der Körner des zweiten Stoffes zu Magnesia-Spinell reagiert. Die Körner auf Basis Al₂O₃ können damit wirksam als Elastifizierer in dem Erzeugnis wirken, da das Al₂O₃ dieser Körner nicht oder nur in unwesentlichen Anteilen mit dem MgO der Körnern auf Basis MgO zu Magnesia-Spinell reagiert.

Hinsichtlich der Brenntemperatur wurde festgestellt, dass die Menge des Gebildeten Gahnits und die Dicke der daraus gebildeten Beschichtung auf den Körnern aus Sinterkorund bei den Erzeugnissen, die bei 1.500 °C gebrannt wurden, größer war als bei den Erzeugnissen, die bei 1.300 °C gebrannt wurden.

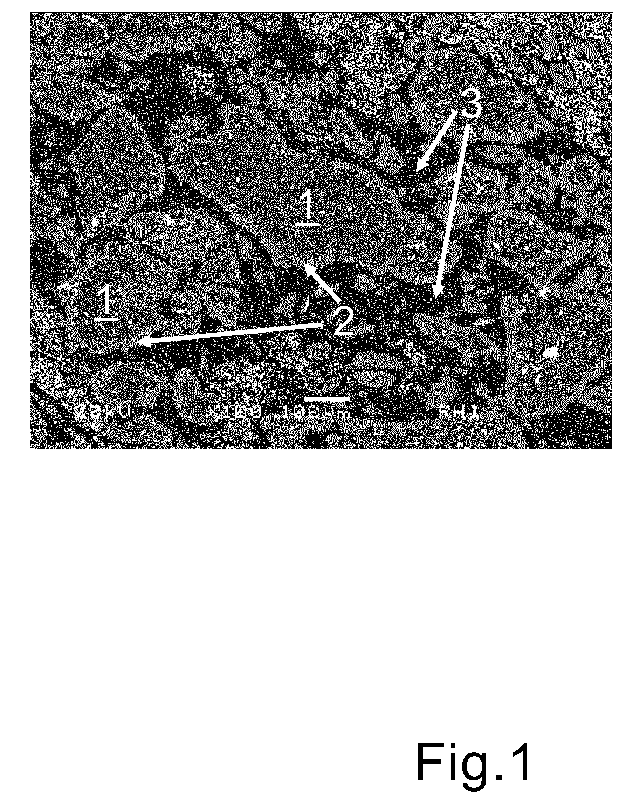

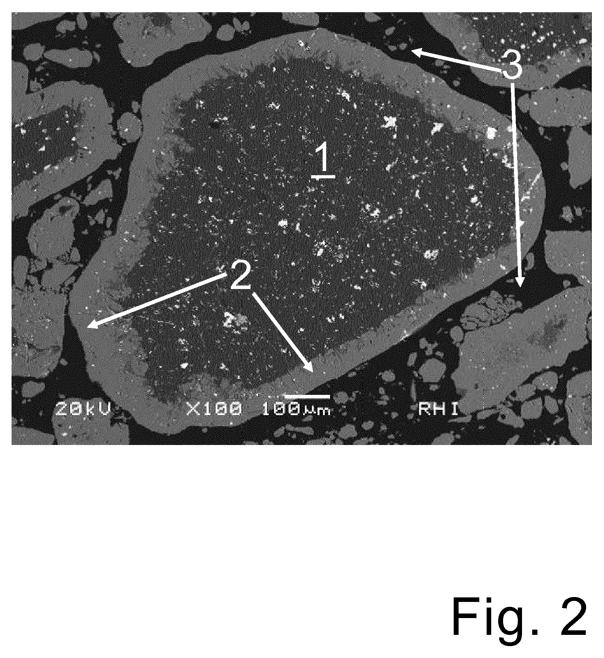

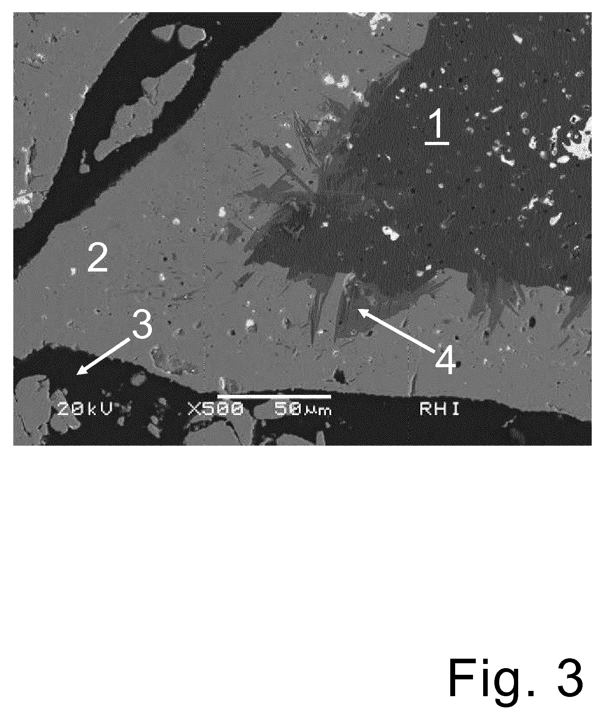

Die Figuren 1 bis 3 zeigen vergrößerte Ansichten auf Anschliffe der gemäß den vorstehenden Ausführungsbeispielen hergestellten Erzeugnisse. Dabei zeigt Figur 1 einen Ausschnitt eines bei 1.300 °C gebrannten und die Figuren 2 und 3 Ausschnitte eines bei 1.500 °C gebrannten Erzeugnisses.

Figur 1 zeigt einen Ausschnitt von etwa 1,27 x 0,95 mm. Der weiße Balken unten in der Bildmitte entspricht einer Länge von 100 µm. Zu erkennen ist die aus dem ersten Stoff in Form von Sintermagnesia gebildete, in Figur 1 schwarz erscheinende Matrix 3. In diese Matrix 3 sind die Körner 1 aus dem zweiten Stoff in Form von Korund eingelagert, die dunkelgrau erscheinen. Die auf der Oberfläche der Körner 1 vorhandene Beschichtung 2 in Form des dritten Stoffes aus Gahnit erscheint in Figur 1 als hellgrauer Saum, der die Körner 1 umgibt. Die Beschichtung 2 weist eine Dicke im Bereich von etwa 10 bis 30 µm auf; durchschnittlich liegt die Dicke der Beschichtung 2 bei etwa 20 µm.

In Figur 2 ist ein Ausschnitt des Erzeugnisses in den gleichen Maßen gemäß Figur 1 dargestellt. Wiederum ist die Matrix aus Sintermagnesia mit dem Bezugszeichen 3 gekennzeichnet. An dem in die Matrix 3 eingelagerten, großen Korn 1 aus Korund ist die Beschichtung 2 aus Gahnit besonders gut zu erkennen. Aufgrund der höheren Brenntemperaturen weist die Beschichtung 2 aus Gahnit eine höhere Dicke auf, nämlich im Bereich von etwa 50 bis 150 µm; durchschnittlich liegt die Dicke der Beschichtung 2 bei etwa 100 µm.

In Figur 3 ist ein stärker vergrößerter Ausschnitt des Erzeugnisses gemäß Figur 2 dargestellt. Der dargestellte Ausschnitt gibt eine Größe von etwa 270 x 200 µm wieder. Zu erkennen ist ein Abschnitt des Randbereiches eines Korundkornes 1 mit der Beschichtung 2 aus Gahnit. Auf ihrer, der Magnesiamatrix 3 zugewandten Seite weist die Beschichtung 2 neben Gahnit auch Bereiche mit Anteilen an Magnesia und auf ihrer dem Korundkorn 1 zugewandten Seite Bereiche mit Anteilen an Korund auf. So liegen die Massenanteile von ZnO zu Al₂O₃ im Inneren der Beschichtung 2 bei etwa 44,4 zu 55,6 und entsprechen damit in etwa dem stöchiometrischen Verhältnis dieser Oxide zueinander in Gahnit. Demgegenüber liegen beispielsweise die Massenanteile von ZnO zu Al₂O₃ im Bereich 4 der Beschichtung 2 bei etwa 21 zu 79.

## Patentansprüche

1. Feuerfestes keramisches Erzeugnis, dessen Gefüge die folgenden Merkmale aufweist:
Eine Matrix aus wenigstens einem ersten Stoff auf Basis MgO;
in die Matrix sind Körner aus wenigstens einem zweiten Stoff auf Basis Al₂O₃ eingelagert;
die Körner aus dem zweiten Stoff weisen auf ihrer Oberfläche zumindest abschnittsweise eine Beschichtung aus wenigstens einem dritten Stoff auf Basis Gahnit auf;
der erste und zweite Stoff weisen einen unterschiedlichen Wärmeausdehnungskoeffizienten auf;
der dritte Stoff ist bei der Anwendung des Erzeugnisses stabil.

2. Erzeugnis nach Anspruch 1 in Form eines gesinterten Erzeugnisses.

3. Erzeugnis nach wenigstens einem der vorhergehenden Ansprüche, bei dem die Dicke der Beschichtung im Bereich von 5 bis 300 µm liegt.

4. Erzeugnis nach wenigstens einem der vorhergehenden Ansprüche mit einem ersten Stoff in Form miteinander versinterter Körner.

5. Erzeugnis nach wenigstens einem der vorhergehenden Ansprüche, bei dem der Wärmeausdehnungskoeffizient des zweiten Stoffes wenigstens 10 % größer oder kleiner als der Wärmeausdehnungskoeffizient des ersten Stoffes ist, bezogen auf den Wärmeausdehnungskoeffizient des ersten Stoffes.

6. Erzeugnis nach wenigstens einem der vorhergehenden Ansprüche, bei dem die Korngröße der Körner des zweiten Stoffes zwischen der Korngröße der kleinsten Körner und der größten Körner des ersten Stoffes liegt.

## Claims

1. A refractory ceramic product having a microstructure with the following features:
a matrix formed from at least one first substance based on MgO;
grains formed from at least one second substance based on Al₂O₃ are embedded in the matrix;
the grains formed from the second substance have, at least on a portion of their surface, a coating formed from at least one third substance based on gahnite;
the first and second substance have a different coefficient of thermal expansion;
the third substance is stable when the product is in use.

2. The product as claimed in claim 1, in the form of a sintered product.

3. The product as claimed in at least one of the preceding claims, in which the thickness of the coating is in the range 5 to 300 µm.

4. The product as claimed in at least one of the preceding claims, having a first substance in the form of grains sintered together with each other.

5. The product as claimed in at least one of the preceding claims, in which the coefficient of thermal expansion of the second substance is at least 10% greater or smaller than the coefficient of thermal expansion of the first substance, with respect to the expansion of the first substance, with respect to the coefficient of thermal expansion of the first substance.

6. The product as claimed in at least one of the preceding claims, in which the grain size of the grains of the second substance is between the grain size of the smallest grains and the largest grains of the first substance.

## Revendications

1. Produit céramique réfractaire dont la structure présente les caractéristiques suivantes :
une matrice constituée d'au moins une première matière à base de MgO ;
des grains constitués d'au moins une deuxième matière à base d'Al₂O₃ sont incorporés dans ladite matrice ;
la surface des grains constitués de la deuxième matière présente, au moins sur certaines parties, un revêtement constitué d'au moins une troisième matière à base de gahnite ;
la première et la deuxième matières présentent des coefficients de dilatation thermique différents ;
la troisième matière est stable lors de la mise en oeuvre dudit produit.

2. Produit selon la revendication 1 sous forme d'un produit fritté.

3. Produit selon au moins une des revendications précédentes, l'épaisseur dudit revêtement étant comprise entre 5 et 300 µm.

4. Produit selon au moins une des revendications précédentes, la première matière se présentant sous forme de corps agglutinés par frittage.

5. Produit selon au moins une des revendications précédentes, le coefficient de dilatation thermique de la deuxième matière étant au moins 10 % plus grand ou plus petit que le coefficient de dilatation thermique de la première matière, en prenant comme référence le coefficient de dilatation thermique de la première matière.

6. Produit selon au moins une des revendications précédentes, la granulométrie des grains de la deuxième matière se situant entre la granulométrie des plus petits et des plus grands grains de la première matière.
